# EUROPEAN PATENT APPLICATION

(11) **EP 2 982 543 A1**
(43) Date of publication of application: **10.02.2016**
(21) Application number: 14180079.7
(22) Date of filing: 06.08.2014
(51) Int. Cl.: B60R 13/07, B60J 10/00, B62D 25/07

(54) **Connecting device and water discharging arrangement for a motor vehicle**

(71) Applicant: Webasto SE, 82131 Stockdorf (DE)
(72) Inventor: Guillet, Julien, 85390 Bazoges en Pareds (FR); Loiseau, André, 79150 Voultegon (FR)
(74) Representative: Epping - Hermann - Fischer

(57) **Abstract**

This invention relates to a connecting device for connecting a water-collecting channel (4) of a motor vehicle to a water draining tube (6) located in a framework (8) of the motor vehicle, comprising:
- an inlet member (10) configured to receive water from the water-collecting channel (4);
- an outlet member (12) connected to the inlet member (10) and configured to discharge the water received from the inlet member (10) to the water draining tube (6) through an outlet duct (14);
- the inlet member (10) being configured to be affixed to the water-collecting channel (4) such that the outlet member (12) can be rotated around a first axis (A) from a delivery position (P₁) to a connecting position (P₂) and from the connecting position (P₂) to the delivery position (P₁).

## Description

The present invention relates to a connecting device for connecting a water-collecting channel of a motor vehicle to a water draining tube located in a framework of the motor vehicle. The present invention also relates to a water discharging arrangement for a motor vehicle comprising a water-collecting channel and a connecting device according to the invention.

Water discharging arrangements have the tendency to become leaky over time, especially in the area of the connecting device. Additionally, water discharging arrangements are often manufactured in a location different from the location where the motor vehicle is produced. Connecting devices, according to the state of the art, are affixed to a water-collecting channel in such a way, that the connecting device adopts a fixed position. Elements of the connecting device can thereby be arranged in such a way that it hinders the fastening of the water discharging arrangement in the motor vehicle.

It is therefore the object that the present invention to improve the known water discharging arrangements. It is another object of the present invention to provide a water discharging arrangement which leaks out less than the water discharging arrangements known from the prior art. It is a further object of the present invention to have a connecting device and a water discharging arrangement comprising the connecting device such that the fastening of the water discharging device on the motor vehicle, for instance by glueing, is facilitated.

Thus, the above and other objects are obtained by providing a connecting device comprising an inlet member configured to receive water from the water-collecting channel and an outlet member connected to the inlet member and configured to discharge the water received from the inlet member to the water draining tube through an outlet duct. The inlet member is substantially hat-shaped.

Thereby, the connecting device can be affixed to the water-collecting channel in such a way, that the inlet member substantially circumferentially surrounds the water-collecting channel, whereby the water-tightness of the water discharging arrangement is improved, especially when the water flows steadily down the water-collecting channel and there is no backflow of water from below the connecting device.

Preferably, the inlet member comprises a barrel section which is substantially cylindrically shaped with a circular cross-section and base section which is substantially planar.

Preferably, the connecting device comprises at least one substantially annular-shaped sealing element configured to be arranged in an annular-shaped recess of the water-collecting channel and configured to engage an inner wall of the inlet member when arranged in the recess.

This preferred embodiment provides the benefit, that the inlet member can be affixed to the water-collecting channel in a watertight manner, thereby still allowing for a rotation of the inlet member.

Together with the hat-shaped inlet member, the position of the sealing element has the advantage, that the water running down from the water-collecting channel does not reach the sealing element. Only water flowing back from the outlet duct can reach the sealing element.

Preferably, the inlet member is configured to be affixed to the water-collecting channel such that the outlet member can be rotated around a first axis from a delivery position to a connecting position and from the connecting position to the delivery position.

Thereby, the connecting device can adopt a delivery position in a water discharging arrangement. The water discharging arrangement then can be easily fastened to a roof of the motor vehicle. For instance, the application of glue on the water discharging arrangement and/or on the roof of the motor vehicle in a glueing operation can be facilitated.

The above and other objects are also obtained by providing a connecting device comprising an inlet member configured to receive water from the water-collecting channel and an outlet member connected to the inlet member and configured to discharge the water received from the inlet member to the water draining tube through an outlet duct. The inlet member is configured to be affixed to the water-collecting channel such that the outlet member can be rotated around a first axis from a delivery position to a connecting position and from the connecting position to the delivery position.

Preferably, the inlet member is substantially cylindrically shaped, with a circular cross-section.

Preferably, the outlet member substantially extends along a second axis, the second axis being oblique to the first axis.

Preferably, the outlet member substantially extends along a second axis and comprises at least one circumferential latching rib for affixing the outlet member to the water draining tube, the at least one rib preferably substantially extending in radial direction with respect to the second axis.

This aspect of the present invention provides the benefit, that the outlet member can be securely fastened to the water draining tube.

According to another preferred aspect of the invention, the inlet member comprises at least one retaining member configured to be retained on the water-collecting channel by at least one retaining element, such that the outlet member can be rotated around the first axis from the delivery position to the connecting position and from the connecting position to the delivery position.

This aspect of the present invention provides the advantage, that the inlet member can be rotated around the first axis without the connecting device being in danger of falling off from the water-collecting channel it is affixed to, for instance during transport.

According to another preferred aspect of the invention, the retaining member substantially extends in radial direction with respect to the first axis, the retaining member preferably being substantially disk-shaped.

Preferably, the retaining member comprises at least one notch configured such that the at least one retaining element can be fed through the at least one notch when the inlet member is affixed to the water-collecting channel by a motion in a direction parallel to the first axis.

This aspect of the present invention provides the advantage, that the connecting device can be easily affixed to the water-collecting channel by displacing the connecting device in a direction which is parallel to the first axis and subsequently rotating the connecting device around the first axis.

According to a preferred embodiment of the present invention, the retaining member comprises at least a first projection and a second projection, the first projection and the second projection being configured to hold the retaining element in a positive-locking manner when the inlet member is affixed to the water-collecting channel and the outlet member is in the connecting position, wherein preferably the first projection and the second projection extend in a direction substantially orthogonal to the first axis.

According to a preferred embodiment of the present invention, the retaining member comprises at least a third projection and a fourth projection, the third projection and the fourth projection being configured to hold the retaining element in a positive-locking manner when the inlet member is affixed to the water-collecting channel and the outlet member is in the delivery position, wherein preferably the third projection and the fourth projection extend in a direction substantially orthogonal to the first axis.

The objects of the invention are further attained by a water discharging arrangement for a motor vehicle comprising a water-collecting channel and a connecting device according to the present invention, the inlet member of the connecting device being affixed to the water-collecting channel.

According to a preferred embodiment of the present invention, the water-collecting channel comprises at least one retaining element configured to retain the inlet member on the water-collecting channel and allow a rotation of the connecting device around the first axis. This way, the at least one retaining element prevents the connecting element from falling off the water-collecting channel, for instance during transport, and allows for a rotation of the connecting element around the first axis from the delivery position to the connecting position and vice versa, when affixed on the water-collecting channel.

Preferably, the retaining element comprises a retaining projection arranged in between the first projection and the second projection when the outlet member is in the connecting position, the retaining projection thereby holding the outlet member in the connecting position in a positive-locking manner.

This aspect of the present invention provides the benefit, that the connecting device is held in the position it is destined to take when it is arranged in the motor vehicle, such that the outlet member can be connected to the water draining tube. This aspect also provides feedback to a user affixing the connecting device to the water-collecting channel when the connecting device reaches the connecting position.

According to another aspect of the present invention, the water-collecting channel is of essentially tubular shape, and comprises a cavity and an opening, the opening being in communication with the cavity and the outlet duct.

These and other objects, features and advantages of the present invention will become more apparent from the following description when taken in connection with the accompanying drawings which will show, for purposes illustration only, two embodiments in accordance with the present invention. Eight attached drawings show:
- Figure 1 shows a connecting device according to the first embodiment of the present invention in a perspective view;
- Figure 2 shows a perspective view of a water-collecting channel and a draining tube located in a framework of the motor vehicle according to the first embodiment;
- Figure 2a shows a perspective view of a water-collecting channel and a draining tube according to a second embodiment of the present invention;
- Figure 3 shows a cross section view of the water discharging arrangement according to the first embodiment the present invention;
- Figure 4 shows the water discharging arrangement according to the first embodiment wherein the connecting device adopts the delivery position in a perspective view;
- Figure 5 shows the water discharging arrangement according to the first embodiment wherein the connecting device adopts the connecting position in a perspective view;
- Figure 6 shows a perspective view of the water discharging arrangement according to the first embodiment wherein the connecting device adopts the delivery position;
- Figure 7 shows the water discharging arrangement according to the first embodiment in a perspective view, wherein the connecting device adopts the connecting position;
- Figure 8 shows the water discharging arrangement according to the first embodiment with a connecting device adopting the connecting position in a perspective view.

The invention consist in a connecting device 2 for connecting a water-collecting channel 4 of a motor vehicle to a water draining tube 6 located in a framework 8 of the motor vehicle.

As shown in the attached figures, the connecting device 2 comprises an inlet member 10 configured to receive water from the water-collecting channel 4. The connecting device 2 further comprises an outlet member 12 connected to the inlet member 10 and configured to discharge the water received from the inlet member 10 to the water draining tubes 6 through an outlet duct 14. The inlet member 10 is substantially hat-shaped and comprises a barrel section 11 which is substantially cylindrically shaped with a circular cross-section as well as a base section 13 which is substantially planar in shape.

The inlet member 10 is configured to be affixed to the water-collecting channel 4 in such a way that the outlet member 12 can be rotated around a first axis A from a delivery position P₁ to a connecting position P₂ and from the connecting position P₂ to the delivery position P₁.

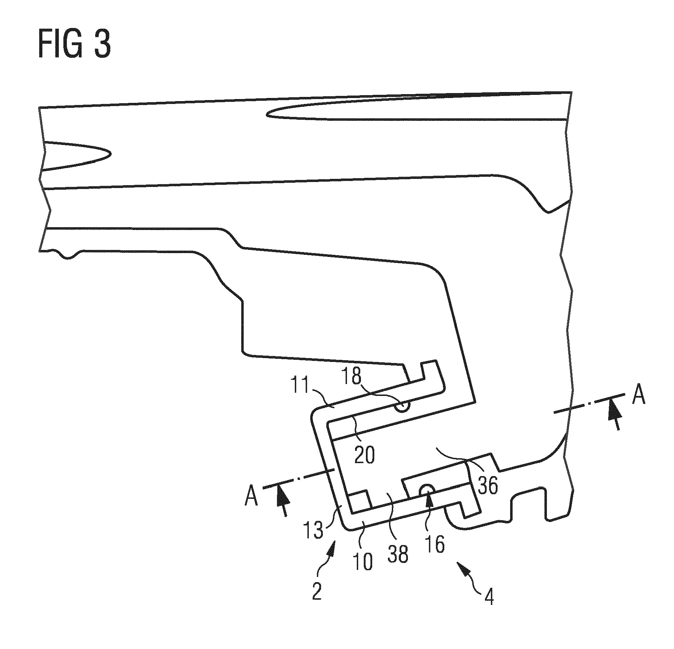

As shown in figure 3, the connecting device 2 can comprise a substantially annular-shaped sealing element 16 which is configured to be arranged in an annular-shaped recess 18 of the water-collecting channel 4. The annular-shaped sealing element 16 is also configured to engage an inner wall 20 of the inlet member 10 when arranged in the recess 18.

This way, the connecting device 2 can be affixed to the water-collecting channel 4 in a watertight manner.

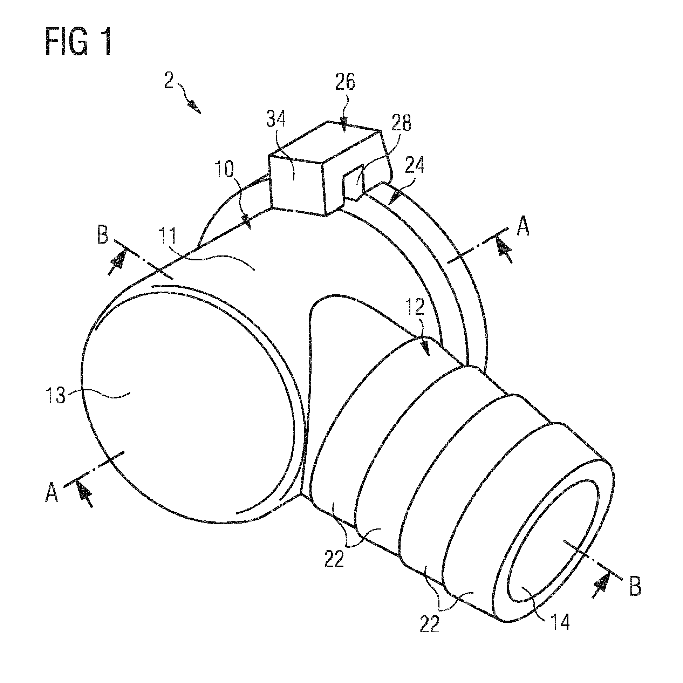

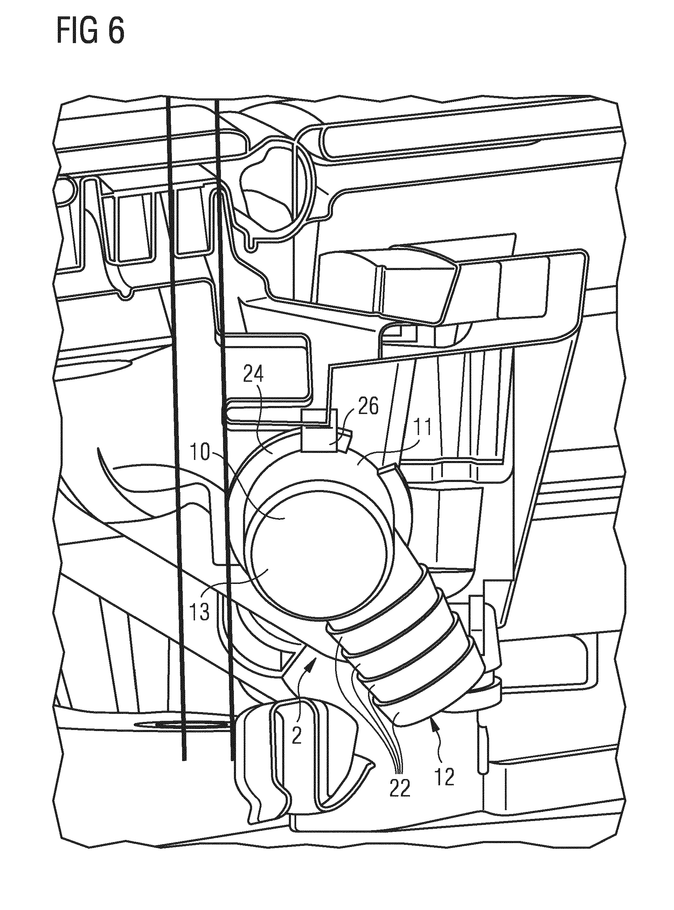

As shown in figures 1 and 3 to 8, the inlet member 10 is substantially cylindrically shaped with a circular cross-section. Also, the outlet member 12 is substantially cylindrically shaped with a circular cross-section.

The outlet member 12 preferably substantially extends along a second axis B, the second axis B being oblique to the first axis A. In other words, the first axis A and the second axis B form an angle which is greater than 0. Preferably, the angle formed by the first axis A and the second axis B is in between 5° and 175°.

The outlet member 12 comprises at least one rib 22 for affixing the outlet member 12 to the water draining tube 6. The at least one rib 22 preferably substantially extends in radial direction with respect to the second axis B. The connecting device 2 according to the preferred embodiment comprises four ribs 22 which are consecutively to be arranged along the second axis B.

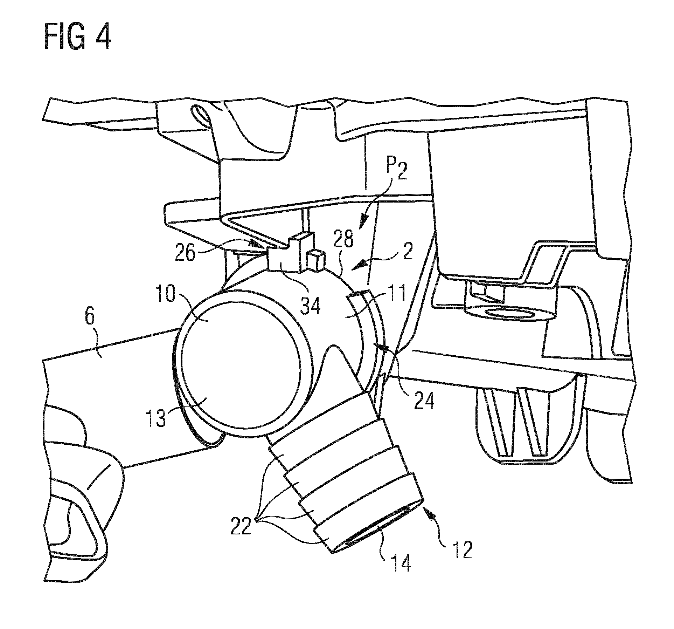

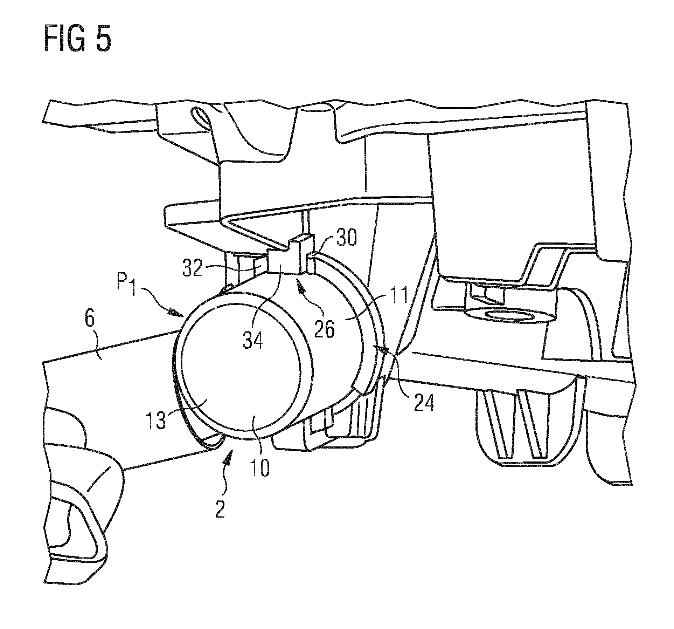

As can be seen in particular in figures 4 to 8, the inlet member 10 comprises at least one retaining member 24 configured to be rotatably retained on the water-collecting channel 4 by at least one retaining element 26. This way, the outlet member 12 can be rotated around the first axis A from the delivery position P₁ to the connecting position P₂ and from the connecting position P₂ to the delivery position P₁. This rotation is particularly depicted in figures 4 and 5.

The retaining member 24 substantially extends in radial direction with respect to the first axis A, preferably, the retaining member 24 is substantially disk-shaped.

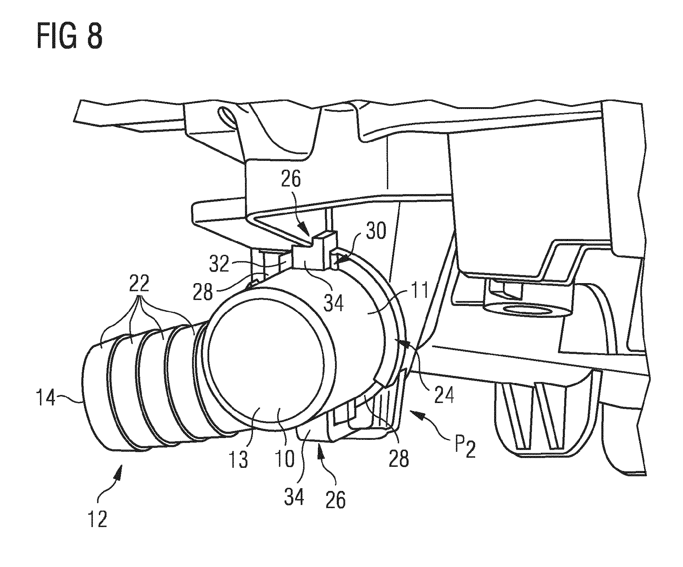

The retaining member 24 preferably comprises at least one notch 28 configured such that the at least one retaining element 26 can be fed through the at least one notch 28 when the inlet member 10 is affixed to the water-collecting channel 4 by a motion in a direction parallel to the first axis A. According to the described embodiment of the present invention, the retaining member 24 comprises two notches 28 and the water-collecting channel 4 comprises two retaining elements 26, the notches 28 and the retaining elements 26 being symmetrically arranged with respect to the first axis A. The connecting device 2 having the notches 28 and the retaining elements 26 are particularly depicted in figures 1 and 8.

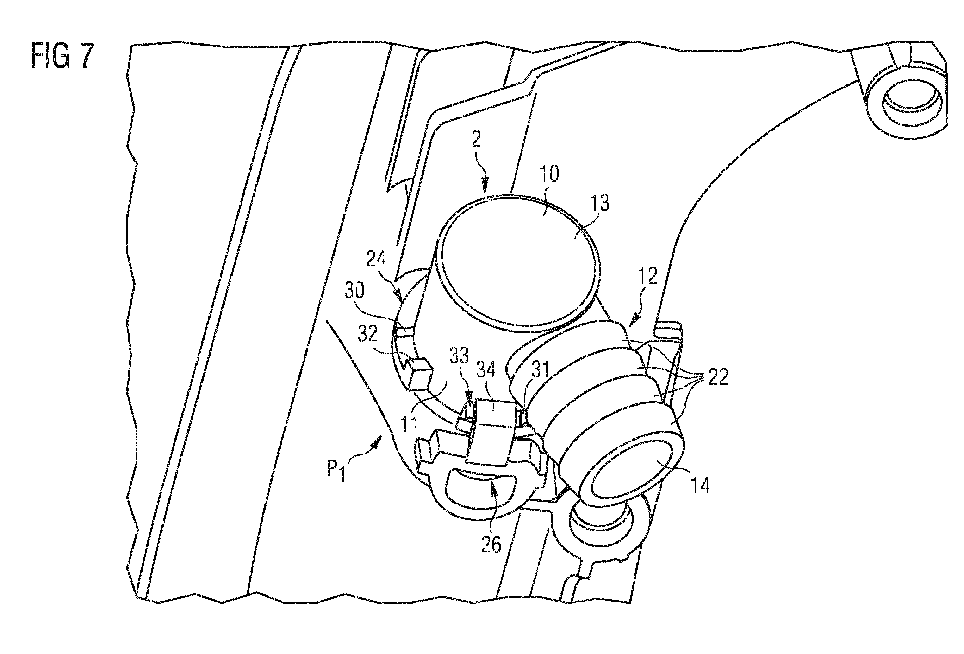

Preferably, the retaining member 24 comprises at least a first projection 30 and a second projection 32. The first projection 30 and the second projection 32 are configured to hold the retaining element 26 in a positive-locking manner when the inlet member 10 is affixed to the water-collecting channel 4 and the outlet member 12 is in the connecting position. This is particularly depicted in figures 7 and 8. Preferably, the first projection 30 and the second projection 32 extend substantially in radial direction with respect to the first axis A. In this way, the connecting device 2 can be held on the water-collecting channel 4 in the connecting position P₂. The retaining element 26 can comprise a retaining projection 34. Then, in order to arrange the connecting device 2 in the connecting position P₂, the connecting device 2 is rotated around the first axis A such that the retaining projection 34 slides over the first projection 30 until the retaining projection 34 is located in between the first projection 30 and the second projection 32. Thereby, the connecting device 2 is held in the connecting position P₂, preventing the connecting device 2 from being accidentally turn out of the connecting position P₂.

Preferably, the retaining member 24 can comprise a third projection 31 and a fourth projection 33 which are configured to hold the retaining element 26 in a positive-locking manner when the inlet member 10 is affixed to the water-collecting channel 4 and the outlet member 12 is in the delivery position P₁.

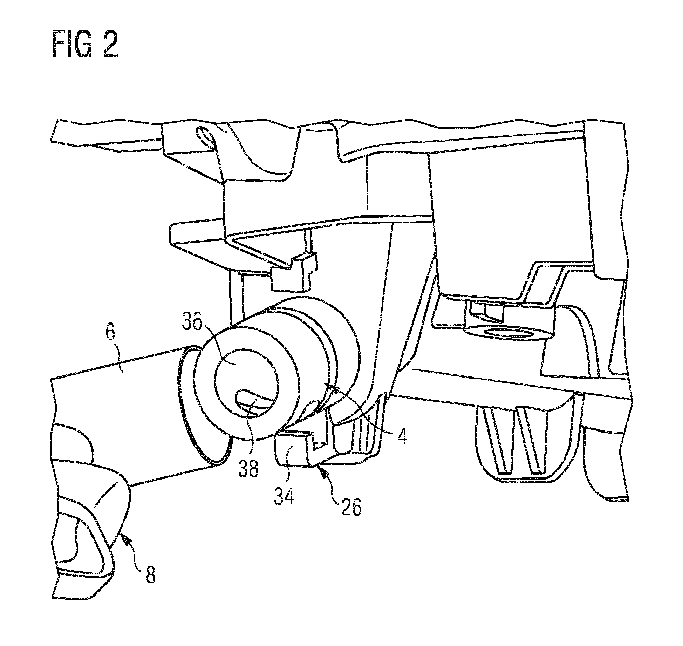

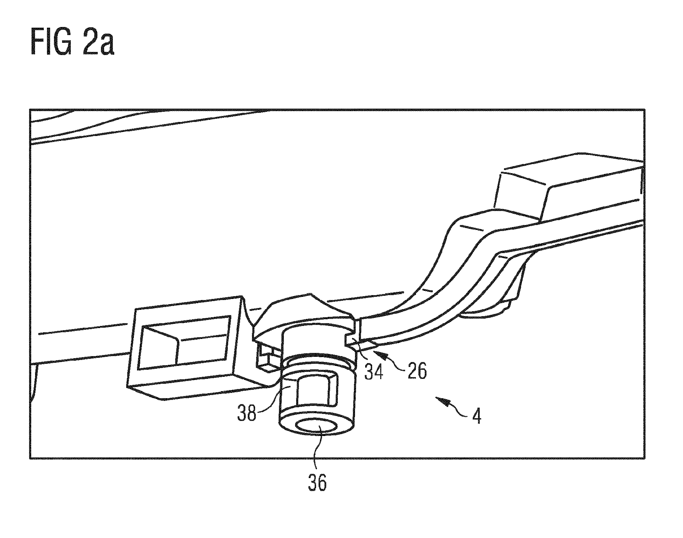

As can be seen in figure 2, the water-collecting channel 4 of the water discharging arrangement is of essentially tubular shape, and comprises a cavity 36 and an opening 38. The opening 38 is in communication with the cavity 36 and the outlet duct 14, as can be seen in figures 2 and 3.

Figure 2a shows the water-collecting channel 4 of the water discharging arrangement in an alternative embodiment. In this embodiment, the water-collecting channel 4 is substantially arranged vertically. According to both embodiments, the path of the water collected by the water-collecting channel 4 runs through the cavity 36 and the opening 38 into the outlet duct 14 of the connecting device 2. Thereby, the water does not directly run by the sealing element 16. The invention presents the additional advantages, that less space is occupied by the water discharging arrangement in the sunroof environment, that the joints can be maintained in intermediate positions and that damage made to the water discharging arrangement during a glueing operation can be prevented.

While this description describes only one embodiment in accordance with the present invention, it is understood that the same is not limited there too but is susceptible of numerous changes and modifications as known to those skills in the art.

Therefore, the present invention is not limited to the details shown and describes herein but also covers all such changes and modifications.

## Claims

1. Connecting device for connecting a water-collecting channel (4) of a motor vehicle to a water draining tube (6) located in a framework (8) of the motor vehicle, comprising:
- an inlet member (10) configured to receive water from the water-collecting channel (4);
- an outlet member (12) connected to the inlet member (10) and configured to discharge the water received from the inlet member (10) to the water draining tube (6) through an outlet duct (14); the inlet member (10) being substantially hat-shaped.

2. Connecting device according to claim 1, **characterized by** at least one substantially annular-shaped sealing element (16) configured to be arranged in an annular-shaped recess (18) of the water-collecting channel (4) and configured to engage a inner wall (20) of the inlet member (10) when arranged in the recess (18).

3. Connecting device according to claim 1 or 2, **characterized in that** the inlet member (10) is configured to be affixed to the water-collecting channel (4) such that the outlet member (12) can be rotated around a first axis (A) from a delivery position (P₁) to a connecting position (P₂) and from the connecting position (P₂) to the delivery position (P₁).

4. Connecting device according to any one of the claims 1 to 3, **characterized in that** the outlet member (12) substantially extends along a second axis (B), the second axis (B) being oblique to the first axis (A).

5. Connecting device according to any one of the claims 1 to 4, **characterized in that** the outlet member (12) substantially extends along a second axis (B) and comprises at least one circumferential latching rib (22) for affixing the outlet member (12) to the water draining tube (6), the at least one rib (22) preferably substantially extending in radial direction with respect to the second axis (B).

6. Connecting device according to any one of the claims 1 to 5, **characterized in that** the inlet member (10) comprises at least one retaining member (24) configured to be rotatably retained on the water-collecting channel (4) by at least one retaining element (26), such that the outlet member (12) can be rotated around the first axis (A) from the delivery position (P₁) to the connecting position (P₂) and from the connecting position (P₂) to the delivery position (P₁).

7. Connecting device according to claim 6, **characterized in that** the retaining member (24) substantially extends in radial direction with respect to the first axis (A), the retaining member (24) preferably being substantially disk-shaped.

8. Connecting device according to claim 6 or 7, **characterized in that** the retaining member (24) comprises at least one notch (28) configured such that the at least one retaining element (26) can be fed through the at least one notch (28) when the inlet member (10) is affixed to the water-collecting channel (4) by a motion in a direction parallel to the first axis (A).

9. Connecting device according to any one of the claims 6 to 8, **characterized in that** the retaining member (24) comprises at least a first projection (30) and a second projection (32), the first projection (30) and the second projection (32) being configured to hold the retaining element (26) in a positive-locking manner when the inlet member (10) is affixed to the water-collecting channel (4) and the outlet member (12) is in the connecting position (P₂), wherein preferably the first projection (30) and the second projection (32) extend in a direction substantially orthogonal to the first axis (A).

10. Water discharging arrangement for a motor vehicle comprising a water-collecting channel (4) and a connecting device (2) according to any one of claims 1 to 9, the inlet member (10) of the connecting device (2) being affixed to the water-collecting channel (4).

11. Water discharging arrangement according to claim 10, the connecting device (2) being configured according to any one of the claims 6 to 9, **characterized in that** the water-collecting channel (4) comprises at least one retaining element (26) configured to retain the inlet member (10) on the water-collecting channel (4) and allow a rotation of the connecting device (2) around the first axis (A).

12. Water discharging arrangement according to claim 11, the connecting device (2) being configured according to claim 9, **characterized in that** the retaining element (26) comprises a retaining projection (34) arranged in between the first projection (30) and the second projection (32) when the outlet member (12) is in the connecting position (P₂), the retaining projection (34) thereby holding the outlet member (12) in the connecting position (P₂) in a positive-locking manner.

13. Water discharging arrangement according to one of the claims 10 to 12, **characterized in that** the water-collecting channel (4) is of essentially tubular shape, and comprises a cavity (36) and an opening (38), the opening (38) being in communication with the cavity (36) and the outlet duct (14).

14. Vehicle roof comprising a water discharging arrangement according to anyone of claims 10 to 13.
